# EUROPEAN PATENT APPLICATION

(11) **EP 4 496 062 A1**
(43) Date of publication of application: **22.01.2025**
(21) Application number: 22934176.3
(22) Date of filing: 31.03.2022
(51) Int. Cl.: H01M 10/0567

(54) **LITHIUM ION BATTERY, BATTERY MODULE, BATTERY PACK, AND ELECTRICAL DEVICE**

(71) Applicant: Contemporary Amperex Technology Co., Limited, Fujian 352100 (CN)
(72) Inventor: HUANG, Lei, Ningde City, Fujian 352100 (CN); HAN, Changlong, Ningde City, Fujian 352100 (CN); WANG, Fulin, Ningde City, Fujian 352100 (CN); WU, Zeli, Ningde City, Fujian 352100 (CN); ZHANG, Cuiping, Ningde City, Fujian 352100 (CN)
(74) Representative: Gong, Jinping
(86) International application number: PCT/CN2022/084378
(87) International publication number: WO 2023/184328

(57) **Abstract**

The present disclosure relates to a lithium-ion battery including a first electrolytic solution and a second electrolytic solution. The first electrolytic solution and the second electrolytic solution satisfies 0.1 ≤ [(d2×t2)/(d1×t1)] ≤ 11, where d1 is a mass of the first electrolytic solution, d2 is a mass of the second electrolytic solution, t1 is a ratio of a mass of an additive of the first electrolytic solution to a mass of the first electrolytic solution, and t2 is a ratio of a mass of an additive of the second electrolytic solution to a mass of the second electrolytic solution.

## Description

### TECHNICAL FIELD

The present disclosure relates to the technical field of lithium-ion batteries, and in particular, to a lithium-ion battery, a battery module, a battery pack, and a powered device.

### BACKGROUND

In recent years, the lithium-ion batteries are widely applied to fields of electric tools, electric bicycles, electric motorcycles, electric automobiles, intelligent power grids, military equipment, aerospace and the like. Since the lithium-ion battery is greatly developed, higher requirements are demanded for initial direct current resistance, and battery life and the like. However, the current lithium-ion batteries cannot meet higher requirements of people for the cruising ability. For example, in the field of electric vehicles, people have "mileage anxiety" due to the insufficient cruising ability of the lithium-ion battery. Accordingly, so that a lithium-ion battery with a longer battery life is urgently needed to be developed.

### SUMMARY

In view of the above technical problem, the present disclosure provides a lithium-ion battery, which can reduce initial direct current resistance (sometimes referred to as "initial DCR" hereinafter) and prolong the service life of the battery.

In order to achieve the above, inventors of the present disclosure carries out deep research, and finally found that the technical problem could be solved by containing specific first and second electrolytic solutions in the lithium-ion battery.

A first aspect of the present disclosure provides a lithium-ion battery including a first electrolytic solution and s second electrolytic solution. The first electrolytic solution and the second electrolytic solution satisfies 0.1 ≤ [(d2×t2)/(d1×t1)] ≤ 11, where d1 is a mass of the first electrolytic solution, d2 is a mass of the second electrolytic solution, t1 is a ratio of a mass of an additive of the first electrolytic solution to a mass of the first electrolytic solution, and t2 is a ratio of a mass of an additive of the second electrolytic solution to a mass of the second electrolytic solution.

Manufacturing and using processes of the battery can be divided into three stages based on the SEI, i.e., initial formation of the SEI, repair reforming of the SEI, and balancing stabilization of the SEI.

The initial formation of the SEI occurs in a formation process during the manufacturing process of the battery. The SEI is not unchanged after being formed. On the contrary, the SEI is not stable after the initial formation, and it is thus easily damaged. The electrolytic solution (i.e., the first electrolytic solution) remaining in the electrode assembly is still be consumed during an early using stage of the battery to carry out the repair reforming on the SEI, and this stage usually lasts for 10-50 circles. An amount of the additive in the first electrolytic solution is represented by d1×t1.

After the repair reforming, the stability of the SEI is greatly improved. However, the SEI may be damaged during the using process of the battery to expose new active sites. Accordingly, the additive of the second electrolytic solution needs to be consumed to repair the SEI film, to prevent side reactions from continuously occurring at the active sites. However, in this case, the damage amplitude of the SEI is relatively small, a speed to repair the damage through the reduction reaction of the additive is relatively quick. An amount of the additive of the second electrolytic solution is represented by d2×t2.

The applicant found that when the lithium-ion battery contained the first electrolytic solution and the second electrolytic solution and satisfied 0.1≤[(d2×t2)/(d1×t1)]≤11, the lithium-ion battery had relatively low initial direct current resistance and a good battery life.

In an embodiment of the present disclosure, it is satisfied 1wt%≤t1≤4wt% and/or 3wt%≤t2≤15wt%. If t1 is 1 wt% or more, requirements for the repair reforming of the SEI can be fully satisfied, and it is thus optimal. If t1 is 4 wt% or less, it is possible to prevent the SEI film from becoming too thick in the repair reforming stage, thereby avoiding that the initial direct current resistance is relatively large, so it is optimal. If t2 is 3 wt% or more, requirements for service life process consumption can be fully met, and a good battery life is achieved. If t2 is 15 wt% or less, the cost can be prevented from being too high.

In addition, in an embodiment of the present disclosure, it is satisfied 60%≤d1/(d1+d2)≤95%. If d1/(d1+d2) is 60% or more, full infiltration of the electrode plate/separator can be realized, and abnormality of the battery interface is avoided, so it is optimal. If d1/(d1+d2) is 95% or less, it is avoided that the content of part d1 of the additive is relatively low, to ensure that the additive level of the whole battery is relatively high to achive a good battery life.

In an embodiment, the additive of the first electrolytic solution is one or more selected from a group consisting of vinylene carbonate, fluoroethylene carbonate, tris(trimethylsilyl phosphate), lithium difluorobisoxalato phosphate, lithium bis(oxalato) borate, and lithium difluorophosphate.

The additive of the first electrolytic solution mainly participates in repair reforming of the SEI, and the SEI film formed of vinylene carbonate (referred to as VC hereinafter) has a good passivating effect on the electrodes, but the film-forming impedance thereof is relatively large. The film-forming impedance of other additives is relatively low, but the passivating effect thereof is poorer than VC. Optionally, in the present disclosure, the first electrolytic solution contains VC, and it also contains one or more of fluoroethylene carbonate, tris(trimethylsilyl phosphate), lithium difluorobisoxalato phosphate, lithium bis(oxalate) borate, and lithium difluorophosphate. Accordingly, total film-forming impedance of the additives is low to achieve relatively low initial direct current resistance. Optionally, in the first electrolytic solution, a mass ratio of VC to other additive is 0.5-0.9 in terms of "a mass of VC divided by a mass of the other additive".

In an embodiment, the first electrolytic solution contains a cyclic ester solvent, and the cyclic ester solvent is a compound as shown in Formula I, 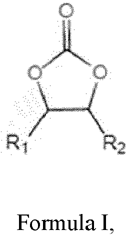 where R₁ and R₂ each are one selected independently from a group consisting of H atom, methyl, ethyl, fluoromethyl, and fluoroethyl.

In an embodiment, the cyclic ester solvent is one or more selected from a group consisting of ethylene carbonate, propylene carbonate, difluoroethylene carbonate, trifluoropropylene carbonate, 4-(2,2,3,3,4,4,5,5,5-nonafluoropentyl)-1,3-dioxolane-2-ketone, and 4-((2,2,3,3-tetrafluoropropoxy) methyl)-1,3 -dioxolane-2-ketone.

In an embodiment, a ratio of a mass of the cyclic ester solvent to a total mass of the solvent in the first electrolytic solution is 20 wt% to 50 wt%.

As described above, in the lithium-ion battery of the present disclosure, the first electrolytic solution is distributed in the electrode assembly. In other words, the first electrolytic solution is distributed among pores of the positive electrode plate, the negative electrode plate, or the separator. Since diameters and volumes of the pores of the electrode plates and the separator are relatively small, an infiltration rate of the electrolytic solution in the electrode plates and the separator is greatly influenced by the solvent. The cyclic ester is a solvent for the electrolytic solution with high dielectric constant and relatively large viscosity. When the cyclic ester is used as the solvent in the electrolytic solution, dissociation of lithium salt in the electrolytic solution is facilitated, and conductivity of the electrolytic solution is improved. However, influence on the infiltration rate of the electrolytic solution in the electrode plates and the separator is relatively great. Therefore, controlling the content of the cyclic ester in the first electrolytic solution facilitates to improve the infiltration rate of the electrolytic solution in the cycling process of the lithium-ion battery, reduce initial direct-current impedance of the battery and the direct-current impedance in the cycling process, and prolong the cycle life of the battery.

In an embodiment, the second electrolytic solution contains a film-forming additive, and the film-forming additive is one or more selected from a group consisting of vinylene carbonate, fluoroethylene carbonate, ethylene carbonate, and 1,3-propane sultone. In the present disclosure, when the second electrolytic solution uses the additive above to participate in the repair process of the SEI film, it can prevent new active sites from being exposed after the SEI is damaged to prevent continuously inducing side reactions, thereby prolongin the service life of the battery. Moreover, these additives are relatively stable, can exist for a long time in the battery, and do not occur self-decomposition.

In an embodiment, a ratio of a mass of the film-forming additive to a total mass of the additive in the second electrolytic solution is 70 wt% or more.

A second aspect of the present disclosure provides a battery module including the lithium-ion battery of the first aspect of the present disclosure.

A third aspect of the present disclosure provides a battery pack including the battery module of the second aspect of the present disclosure.

A fourth aspect of the present disclosure provides a powered device, which includes at least one of the lithium-ion battery of the first aspect of the present disclosure, the battery module of the second aspect of the present disclosure, or the battery pack of the third aspect of the present disclosure.

The battery module, the battery pack and the powered device include the lithium-ion battery of the first aspect of the present disclosure to have at least the same or similar technical effects as the lithium-ion battery mentioned above.

### BRIEF DESCRIPTION OF DRAWINGS

FIG. 1 is a schematic diagram of a lithium-ion battery according to an embodiment of the present disclosure.
FIG. 2 is an exploded view of the lithium-ion battery according to the embodiment of the present disclosure shown in FIG. 1.
FIG. 3 is a schematic diagram of a battery module according to an embodiment of the present disclosure.
FIG. 4 is a schematic diagram of a battery pack according to an embodiment of the present disclosure.
FIG. 5 is an exploded view of the battery pack according to the embodiment of the present disclosure shown in FIG. 4.
FIG. 6 is a schematic diagram of a powered device according to an embodiment of the present disclosure.

Reference signs:
1 battery pack; 2 upper box body; 3 lower box body; 4 battery module; 5 lithium-ion battery; 51 casing body; 52 electrode assembly; 53 cover plate.

### DESCRIPTION OF EMBODIMENTS

Embodiments of a lithium-ion battery and a manufacturing method thereof, a battery module, a battery pack and a powered device of the present disclosure are described in detail below with reference to the accompanying drawings. However, unnecessary detailed description may be omitted. For example, a detailed description of well-known items and a repeated description of an actually same structure are omitted. This is to avoid unnecessarily lengthy of the following description, thereby making it convenient for those skilled in the art to understand. In addition, the accompany drawings and the following description are provided to make those skilled in the art to fully understand the present disclosure, which is not intended to limit the subject matter recited in the claims thereto.

A "range" disclosed herein is defined in a form of a lower limit and an upper limit, and a given range is defined by selecting a lower limit and an upper limit, while the selected lower limit and upper limit define a boundary of a particular range. The range defined in this manner may include or do not include an end value and may be arbitrarily combined, that is, any lower limit may be combined with any upper limit to form a range. For example, if ranges of 60 to 120 and 80 to 110 are listed for a particular parameter, it is understood that ranges of 60 to 110 and 80 to 120 are also expected. Further, if minimum range values 1 and 2 are listed and maximum range values 3, 4, and 5 are listed, ranges of 1 to 3, 1 to 4, 1 to 5, 2 to 3, 2 to 4, and 2 to 5 may all be expected. In the present disclosure, unless otherwise stated, a numerical range "a to b" means an abbreviated representation of a combination of any real numbers between a to b, where a and b are both real numbers. For example, a numerical range "0 to 5" means that all real numbers between "0 and 5" are all listed herein, and "0 to 5" is merely an abbreviated representation of combinations of these numbers. In addition, when it is expressed that a certain parameter is an integer which is ≥ 2, it is equivalent to disclosing that the parameter is, for example, an integer 2, 3, 4, 5, 6, 7, 8, 9, 10, 11, 12, or the like.

If not specifically stated, all embodiments and optional embodiments of the present disclosure may be combined with each other to form a new technical solution.

If not specifically stated, all technical features and optional technical features of the present disclosure may be combined with each other to form a new technical solution.

If not specifically stated, all steps of the present disclosure may be performed sequentially or may be performed randomly, preferably sequentially. For example, the method includes steps (a) and (b), indicating that the method may include steps (a) and (b) performed sequentially or may include steps (b) and (a) performed sequentially. For example, the method may further include a step (c), indicating that the step (c) may be added to the method in any order, for example, the method may include steps (a), (b), and (c), or it may include steps (a), (c), and (b), or it may include steps (c), (a), and (b).

If not specifically stated, "include and "comprise" mentioned in the present disclosure represent an open type or may be a closed type. For example, the "include" and "comprise" may indicate that other un-listed components can be further included or comprised, or only listed components are included or comprised.

If not specifically stated, a term "or" is inclusive in the present disclosure. For example, a phrase "A or B" means "A, B, or both A and B". More specifically, the condition "A or B" is satisfied by either of the following conditions: A is true (or present) and B is false (or not present); A is false (or not present) and B is true (or present); or both A and B are true (or present).

### [Lithium-Ion Battery]

The lithium-ion battery of the present disclosure includes an electrode assembly, a casing for accommodating the electrode assembly, a first electrolytic solution, and a second electrolytic solution.

The electrode assembly includes a positive electrode plate, a negative electrode plate, a separator and the like. In the present disclosure, the first electrolytic solution is distributed in the electrode assembly, i.e., it is distributed in pores of the electrode plates and the separator. The first electrolytic solution is in direct contact with positive and negative electrode active materials. The second electrolytic solution is distributed in a space between the electrode assembly and the casing. In an embodiment, the second electrolytic solution is deposited at the bottom of the lithium-ion battery or freely spread outside the electrode assembly, but not necessarily at the bottom. During the use of the lithium-ion battery, the second electrolytic solution slowly diffuses toward a motor assembly, that is, the second electrolytic solution slowly diffuses toward the electrode plates and the separator.

### [Negative Electrode Plate]

The negative electrode plate includes a negative electrode current collector and a negative electrode diaphragm disposed on at least one surface of the negative electrode current collector. As an example, the negative electrode current collector has two surfaces opposite to each other in a thickness direction thereof, and the negative electrode diaphragm is disposed on any one or both of the two opposite surfaces of the negative electrode current collector.

In some embodiments, the negative electrode current collector can be made of a material with good conductivity and mechanical strength to conduct and collect current. In some embodiments, the negative electrode current collector may employ a copper foil.

In some embodiments, the negative electrode diaphragm includes a negative electrode material, and the negative electrode material includes at least one of lithium metal or lithium metal alloy. The present disclosure is provided in such a manner that the negative electrode material includes at least one of lithium metal or lithium metal alloy. The present disclosure is provided in such a manner that the negative electrode material includes at least one of lithium metal or lithium metal alloy to further improve an energy density of the battery.

### [Positive Electrode Plate]

In some embodiments, the positive electrode plate includes a positive electrode current collector and a positive electrode diaphragm, and the positive electrode diaphragm is arranged on at least one surface of the positive electrode current collector and includes a positive electrode active material. As an example, the positive electrode current collector has two surfaces opposite to each other in a thickness direction thereof, and the positive electrode diaphragm is disposed on any one or both of the two opposite surfaces of the positive electrode current collector.

In some embodiments, the positive electrode current collector can be made of a material having good electrical conductivity and mechanical strength. In some embodiments, the positive electrode current collector may use aluminum foil.

The specific type of the positive electrode active material is not specifically limited, and materials for the positive electrode of the lithium-ion battery in the filed can be adopted, and those skilled in the art can select according to actual requirements.

In some embodiments, the positive electrode active material may be selected from lithium transition metal oxide and a modified material thereof, and the modified material may be lithium transition metal oxide that is modified through doping and/or coating. For example, the lithium transition metal oxide can be one or more selected from a group consisting of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate.

As an example, the positive electrode active material of the lithium-ion battery can be one or more selected from a group consisting of LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄(LFP), and LiMnPO₄. In some embodiments, the positive electrode active material of the lithium-ion battery preferably includes at least one of lithium nickel cobalt lithium manganate, lithium nickel cobalt aluminate, or lithium iron phosphate.

In some embodiments, the positive electrode diaphragm further optionally includes a binding agent. The type of the binding agent is not specifically limited, and those skilled in the art can select according to actual requirements. As an example, the binding agent for the positive electrode diaphragm may include one or more of polyvinylidene fluoride (PVDF) and polytetrafluoroethylene (PTFE).

In some embodiments, the positive electrode diaphragm further optionally includes a conductive agent. The type of the conductive agent is not specifically limited, and those skilled in the art can select according to actual requirements. As an example, the conductive agent for the positive electrode diaphragm can include one or more of graphite, superconducting carbon, acetylene black, carbon black, Ketjen black, carbon dots, carbon nanotubes, graphene and carbon nanofibers.

In some embodiments, the positive electrode diaphragm is of a porous structure, a porosity of which is 5%-30%, preferably 10%-25%.

### [Separator]

The separator is arranged between the positive electrode and the negative electrode for isolation. The type of the separator is not particularly limited in the present disclosure, and any well-known porous separator with good chemical stability and mechanical stability can be selected. In some embodiments, a material of the separator can be selected from one or more of glass fiber, non-woven fabric, polyethylene, polypropylene, and polyvinylidene fluoride. The separator may be a monolayer film or a multilayer composite film. When the separator is a multilayer composite film, materials of various layers may be the same or different.

In some embodiments, the porosity of the separator is 30%-70%, preferably 35%-60%.

### [Electrode Assembly]

In some embodiments of the present disclosure, an electrode assembly including the positive electrode, the negative electrode, and the separator arranged between the positive electrode and the negative electrode is prepared.

### [First Electrolytic solution]

In some embodiments, after a main body of the electrode assembly is prepared, a first pre-electrolytic solution is injected into the main body. Processes such as formation and standing are performed in such a manner that the first pre-electrolytic solution fully immerses in the electrode assembly, and it is the first electrolytic solution.

In some embodiments of the present disclosure, the first electrolytic solution is distributed in the electrode assembly.

The first electrolytic solution contains organic solvent, lithium salt, and additive.

The additive of the first electrolytic solution includes one or more selected from a group consisting of vinylene carbonate (VC), fluoroethylene carbonate (FEC), tris(trimethylsilyl phosphate) (TMSP), lithium difluorobis(oxalate) phosphate (LiDFOP), lithium bis(oxalate) borate (LiBOB), and lithium difluorophosphate (LiPO₂F₂).

A content t1 of the additive contained in the first electrolytic solution is 1 wt%-4 wt%, preferably 1.5 wt%-3.9 wt%, and more preferably 1.7 wt%-3.5 wt%.

The additive of the first electrolytic solution mainly participates in repair reforming of the SEI, in which the film-forming effect of VC is good, but the film-forming impedance thereof is relatively large. The film-forming impedance of other additives is relatively low, but the film-forming effect thereof is poorer than VC. Optionally, in the present disclosure, the first electrolytic solution contains VC, and it also contains one or more of fluoroethylene carbonate, tris (trimethylsilyl phosphate), lithium difluorobisoxalato phosphate, lithium bis(oxalate) borate, and lithium difluorophosphate. Optionally, in the first electrolytic solution, a mass ratio of VC to other additive is 0.5-0.9 in terms of "a mass of VC divided by a mass of the other additive". In the present disclosure, the VC matches with the other additive such that total film-forming impedance of the additive can be further reduced and the initial DCR of the battery can be further reduced.

In some embodiments, lithium salt may be one or more selected from a group consisting of lithium hexafluorophosphate, lithium tetrafluoroborate, lithium perchlorate, lithium hexafluoroarsenate, lithium bis(fluorosulfonyl) imide, lithium bis(trifluoromethanesulfonyl) imide, lithium trifluoromethanesulfonate, lithium difluorophosphate, lithium difluoro(oxalato)borate, lithium bis(oxalate) borate, lithium difluorobis(oxalato) phosphate, and lithium tetrafluorooxalate phosphate.

The content of lithium salt contained in the first electrolytic solution is 0.6 mol/L - 1.5 mol/L, preferably 0.7 mol/L - 1.3 mol/L, and more preferably 0.8 mol/L - 1.2 mol/L.

The first electrolytic solution contains an organic solvent, the organic solvent preferably includes cyclic ester solvent, and the cyclic ester solvent is compound as shown in Formula I, 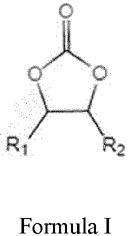 where R₁ and R₂ are one independently selected from a group consisting of H atom, methyl, ethyl, fluoromethyl, and fluoroethyl.

In an embodiment, the cyclic ester solvent is preferably one or more selected from a group consisting of ethylene carbonate (EC), propylene carbonate (PC), difluoroethylene carbonate (DFEC), trifluoroethylene carbonate (TFPC), 4-(2,2,3,3,4,4,5,5,5-nonafluoropentyl)-1,3-dioxolane-2-ketone (NFPEC), and 4-((2,2,3,3-tetrafluoropropoxy)methyl)-1,3-dioxolane-2-ketone (HFEEC). Structural formulas of the cyclic ester solvents are shown as below.

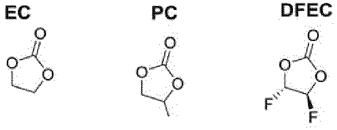

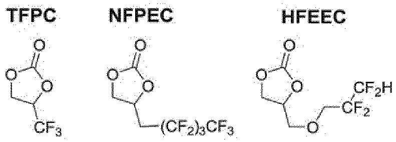

In addition to the cyclic ester solvent, the first electrolytic solution further contains other organic solvents. In some embodiments, the types of the other organic solvents are not particularly limited, can be selected according to actual requirements, and may include one or more of other types of chain carbonate, other cyclic carbonates other than the compounds shown in Formula I, and carboxylic ester. There is no specific limitation on the types of the chain carbonate, the other cyclic carbonates other than the compounds shown in Formula I and the carboxylate, which can be selected according to actual requirements. The solve may be one or more selected from a group consisting of diethyl carbonate, dipropyl carbonate, methyl ethyl carbonate, methyl propyl carbonate, ethylene propylene carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, methyl propionate, and tetrahydrofuran.

In the present disclosure, based on a total mass of the solvent of the first electrolytic solution, a content ratio of the cyclic ester solvent is 20 wt%-50 wt%, preferably 15 wt%-45 wt%, more preferably 20 wt%-40 wt%.

In some embodiments, in addition to containing the above additive, the first electrolytic solution optionally includes other additives. As an example, the other additives may include at least one of sulfate compound, sultone compound, disulfonic acid compound, nitrile compound, aromatic compound, isocyanate compound, phosphonitrile compound, cyclic anhydride compound, phosphite compound, phosphate compound, borate compound, or carboxylate compound.

### [Second Electrolytic Solution]

In some embodiments of the present disclosure, the second electrolytic solution is distributed in a space between the electrode assembly and the casing.

The second electrolytic solution includes an organic solvent, lithium salt, and additive.

In some embodiments, lithium salt contained in the second electrolytic solution may be one or more selected from a group consisting of lithium hexafluorophosphate, lithium tetrafluoroborate, lithium perchlorate, lithium hexafluoroarsenate, lithium bis(fluorosulfonyl) imide, lithium bis(trifluoromethanesulfonyl) imide, lithium trifluoromethanesulfonate, lithium difluorophosphate, lithium difluoro(oxalato)borate, lithium bis(oxalate) borate, lithium difluorobis(oxalato) phosphate, and lithium tetrafluorooxalate phosphate.

The content of lithium salt contained in the second electrolytic solution is 0.6 mol/L -1.5 mol/L, preferably 0.7 mol/L -1.3 mol/L, and more preferably 0.8 mol/L - 1.2 mol/L.

The second electrolytic solution contains a film-forming additive, and the film-forming additive is one or more selected from a group consisting of vinylene carbonate (VC), fluoroethylene carbonate (FEC), ethylene carbonate (VEC), and 1,3-propane sultone (PS).

A mass ratio t2 of the film-forming additive in the second electrolytic solution to the second electrolytic solution is 3wt%-15wt%, preferably 4wt%-12wt%, and more preferably 5wt%-10wt%.

The second electrolyte may contain other additives in addition to the film-forming additive mentioned above. These other additives may include at least one of cyclic carbonate compound containing an unsaturated bond, halogen-substituted cyclic carbonate compound, sulfate compound, sulphonate lactone compound, disulfonic acid compound, nitrile compound, aromatic compound, isocyanate compound, phosphazene compound, cyclic anhydride compound, phosphite compound, phosphate compound, borate compound, or carboxylate compound.

A ratio of a mass of the film-forming additive to a total mass of the additive in the second electrolytic solution is 70 wt% or above, preferably 70wt%-95wt%, and more preferably 80wt%-90wt%.

In some embodiments, the type of the organic solvent contained in the second electrolytic solution is not particularly limited and can be selected according to actual requirements, and it can include one or more of chain carbonate, cyclic carbonate, and carboxylic ester. Types of the chain carbonate, the cyclic carbonate and the carboxylate are not specifically limited and can be selected according to actual requirements. The organic solve may be one or more selected from a group consisting of diethyl carbonate, dipropyl carbonate, methyl ethyl carbonate, methyl propyl carbonate, ethylene propylene carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, methyl propionate, and tetrahydrofuran.

In the present disclosure, the first electrolytic solution and the second electrolytic solution are preferably selected to satisfy 0.1≤[(d2×t2)/(d1×t1)] ≤11, where d1 is the mass of the first electrolytic solution, d2 is the mass of the second electrolytic solution, t1 is a mass ratio of the additive of the first electrolytic solution to the first electrolytic solution, and t2 is a mass ratio of the additive of the second electrolytic solution to the second electrolytic solution.

The manufacturing and using processes of the battery may be divided into three stages based on the SEI, i.e., initial formation of the SEI, repair reforming of the SEI, and balancing stabilization of the SEI.

The initial formation of the SEI occurs in a formation process during the manufacturing process of the battery. The SEI is not unchanged after being formed. On the contrary, the SEI is not stable after the initial formation, and it is thus easily damaged. The electrolytic solution (i.e., the first electrolytic solution) remaining in the electrode assembly is still be consumed during an early using stage of the battery to carry out the repair reforming on the SEI, and this stage usually lasts for 10-50 circles. An amount of the additive in the first electrolytic solution is represented by d1×t1.

After the repair reforming, the stability of the SEI is greatly improved. However, the SEI may be damaged during the using process of the battery to expose new active sites. Accordingly, the additive of the second electrolytic solution needs to be consumed to repair the SEI film, to prevent side reactions from continuously occurring at the active sites. However, in this case, the damage amplitude of the SEI is relatively small, a speed to repair the damage through the reduction reaction of the additive is relatively quick. An amount of the additive of the second electrolytic solution is represented by d2×t2. The applicant found that when the lithium-ion battery contained the first electrolytic solution and the second electrolytic solution and satisfied 0.1≤[(d2×t2)/(d1×t1)]≤11, the lithium-ion battery had relatively low initial direct current resistance and a good battery life. In the present disclosure, it is preferably satisfied 0.2≤[(d2×t2)/(d1×t1)]≤8, and further preferably 0.5≤[(d2×t2)/(d1×t1)]≤2.8.

In an embodiment of the present disclosure, it is satisfied 1wt%≤t1≤4wt% and/or 3wt%≤t2≤15wt%. If t1 is 1 wt% or more, requirements for the repair reforming of the SEI can be fully satisfied, and it is thus optimal. If t1 is 4 wt% or less, it is possible to prevent the SEI film from becoming too thick in the repair reforming stage, thereby avoiding that the initial direct current resistance is relatively large, so it is optimal. If t2 is 3 wt% or more, requirements for service life process consumption can be fully met, and a good battery life is achieved. If t2 is 15 wt% or less, the cost can be prevented from being too high.

In addition, in an embodiment of the present disclosure, it is satisfied 60%≤d1/(d1+d2)≤95%. If d1/(d1+d2) is 60% or more, full infiltration of the electrode plate/separator can be realized, and abnormality of the battery interface is avoided, so it is optimal. If d1/(d1+d2) is 95% or less, it is avoided that the content of part d1 of the additive is relatively low, to ensure that the additive level of the whole battery is relatively high to achieve a good battery life.

### [Casing]

In some embodiments, the lithium-ion battery includes a casing for packaging the electrode assembly and the first and second electrolytic solutions. As an example, the positive electrode plate, the negative electrode plate and the separator can be laminated or wound to form a laminated electrode assembly or a jelly-roll electrode assembly. The electrode assembly is enclosed within the casing. The number of the electrode assemblies in the lithium-ion battery may be one or more, which can be adjusted according to requirements.

In some embodiments, the casing of the lithium-ion battery may be a soft package, such as a pouch-type soft package. A material of the soft package may be plastic, for example, it may include one or more of polypropylene (PP), polybutylene terephthalate (PBT), polybutylene succinate (PBS) and the like. The casing of the lithium-ion battery may be a hard casing, such as a hard plastic casing, an aluminum casing, and a steel casing.

### [Lithium-Ion Battery, Battery Module, Battery Pack and Powered Device]

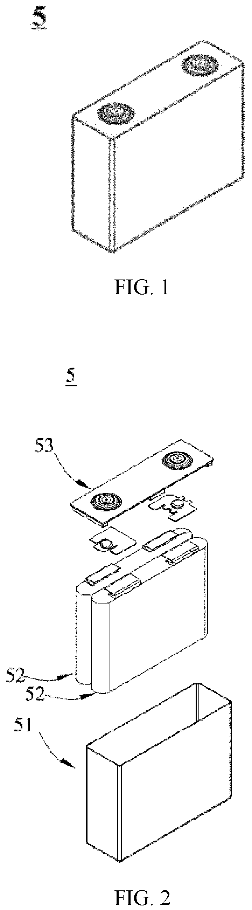

The shape of the lithium-ion battery is not particularly limited, and it can be in a cylindrical shape, a square shape or any other shape. FIG. 1 illustrates a lithium-ion battery 5 with a square structure as an example.

In some embodiments, referring to FIG. 2, the casing includes a casing body 51 and a cover plate 53. The casing body 51 includes a bottom plate and side plates connected to the bottom plate, and the bottom plate and the side plates enclose an accommodating cavity. The casing body 51 has an opening in communication with the accommodating cavity, and the cover plate 53 can cover the opening to enclose the accommodating cavity. The positive electrode plate, the negative electrode plate and the separator forms an electrode assembly 52 through a winding process or a lamination process. The electrode assembly 52 is enclosed in the accommodating cavity. The first electrolytic solution is distributed in the electrode assembly 52, and the second electrolytic solution is distributed in the space between the electrode assembly 52 and the casing. The lithium-ion battery 5 may include one or more electrode assemblies 52, and those skilled in the art can select according to specific actual requirements.

In some embodiments, the lithium-ion battery may be assembled into a battery module, and the number of the lithium-ion battery contained in the battery module may be one or more, the specific number of which may be selected by those skilled in the art according to application and the capacity of the battery module.

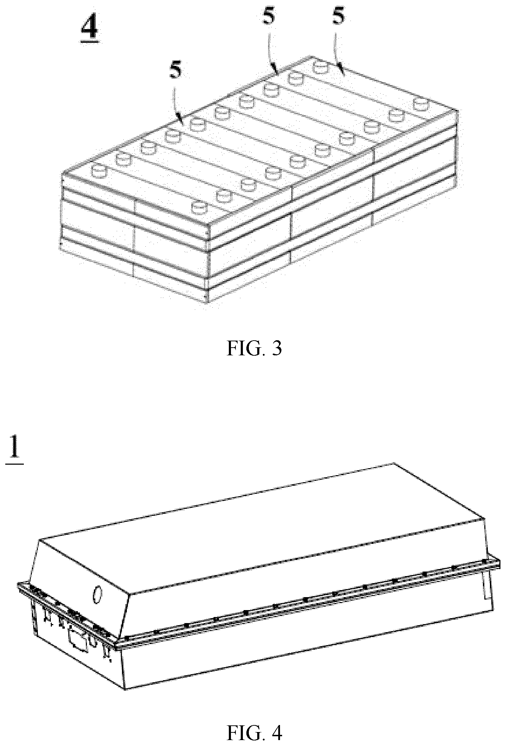

FIG. 3 illustrates a battery module 4 as an example. Referring to FIG. 3, a plurality of lithium-ion batteries 5 of the battery module 4 is sequentially arranged along a length direction of the battery module 4. Alternatively, the lithium-ion batteries may be arranged in any other manner. The plurality of lithium-ion batteries 5 can be further fixed by fasteners.

Optionally, the battery module 4 may further include a shell having an accommodating space, and the plurality of lithium-ion batteries 5 is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

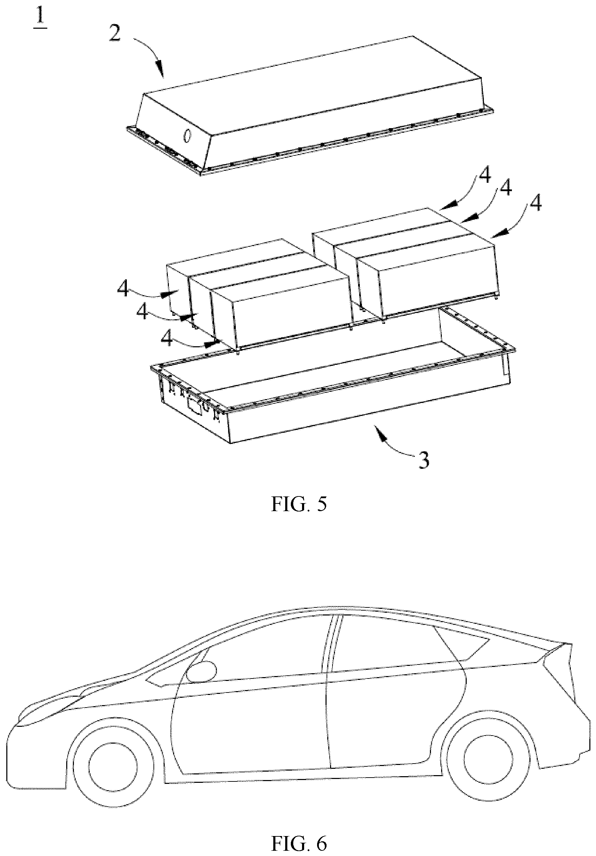

FIG. 4 and FIG. 5 show a battery pack 1 as an example. Referring to FIG. 4 and FIG. 5, the battery pack 1 includes a battery box and a plurality of battery modules 4 provided in the battery box. The battery box includes an upper box body 2 and a lower box body 3, and the upper box body 2 can cover the lower box body 3 to form a closed space for accommodating the battery module 4. The plurality of battery modules 4 may be arranged in the battery box in any manner.

In addition, the present disclosure further provides a powered device, and the powered device includes at least one of the lithium-ion battery, the battery module, or the battery pack according to the present disclosure. The lithium-ion battery, the battery module or the battery pack may be used as a power supply for the powered device, or may be used as an energy storage unit of the powered device. The powered device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The powered device may select the lithium-ion battery, the battery module, or the battery pack according to use requirements thereof.

FIG. 6 illustrates a powered device as an example. The powered device is a pure electric vehicle, a hybrid electric vehicle, a plug-in hybrid electric vehicle and the like. In order to meet requirements of the powered device for high power and high energy density of the secondary battery, a battery pack or a battery module can be adopted.

### [Embodiment and Comparative Examples]

The embodiments of the present disclosure are described below. The embodiments described below are exemplary and only used for explaining the present disclosure, rather than being understood as limitation to the present disclosure. Specific techniques or conditions, which are not specified in the embodiments, are carried out in accordance with techniques or conditions described in literature in the art or in accordance with a specification of a product. Adopted reagents or instruments, which are noted with manufacturers, are all conventional products which are commercially available.

### Embodiments 1 to 20 and Comparative Examples 1 to 2

The lithium-ion batteries in Embodiments 1-20 and Comparative Examples 1-2 are prepared according to a method below.

### [Embodiment 1]

### Preparation of Positive Electrode Plate

Lithium iron phosphate (LFP) of an olivine structure, polyvinylidene fluoride (PVDF) and carbon black (SP) are mixed with the solvent at a mass ratio of 97:2.5:0.5, and they are stirred to obtain uniformly dispersed positive electrode slurry. The positive electrode slurry is uniformly coated on two surfaces of an aluminum foil, which are then dried, cold-pressed, and cut to obtain a positive electrode plate. The mass of the positive electrode plate is 700.0 g, and the mass of the positive electrode active material is 679.0 g.

### Preparation of Negative Electrode Plate

The negative electrode active materials of artificial graphite, carbon black (SP), styrene-butadiene rubber (SBR) and carboxymethyl cellulose (CMC) are mixed with the solvent at a ratio of 97: 0.5: 1.5: 1, and they are stirred to obtain uniformly dispersed negative electrode slurry. The negative electrode slurry is uniformly coated on two surfaces of a copper foil, which are then dried, cold-pressed, and cut to obtain a negative electrode plate. The mass of the negative electrode plate is 311.2 g, and the mass of the negative electrode active material is 298.8 g.

A polyethylene film with a thickness of 12 µm is used as the separator.

### Preparation of First Pre-electrolytic Solution

In an argon atmosphere glove box, 30% of ethylene carbonate (EC), 50% of dimethyl carbonate (DMC), 10% of methyl ethyl carbonate (EMC) and diethyl carbonate (DEC) are mixed in a mass percentage, to prepare an organic solvent mixed solution. Lithium hexafluorophosphate (LiPF₆) with a concentration of 1 mol/L is then slowly added into the organic solvent mixed solution as electrolyte salt. After lithium salt is dissolved, 1% of VC, 0.5% of LiPO₂F₂ and 0.2% of TMSP are added. After that, stirring is performed until complete dissolution, to obtain the first pre-electrolytic solution.

### Preparation of Second Pre-electrolytic Solution

In an argon atmosphere glove box, 30% of ethylene carbonate, 50% of dimethyl carbonate and 20% of methyl ethyl carbonate are mixed in a mass percentage, to prepare an organic solvent mixed solution. Lithium hexafluorophosphate (LiPF₆) with a concentration of 1 mol/L is then slowly added into the organic solvent mixed solution as electrolyte salt. After lithium salt is dissolved, 6% of VC and 1% of succinonitrile (SN) are added. After that, stirring is performed until complete dissolution, to obtain the second pre-electrolytic solution.

### Preparation of Lithium-ion Battery

The positive electrode plate, the separator and the negative electrode plate are stacked in sequence so that the separator is located between the positive electrode plate and the negative electrode plate for isolation, and they are then wound to obtain an electrode assembly. The electrode assembly is placed in an outer package, dried and then injected with the first pre-electrolytic solution. The electrode assembly is charged to 60%SOC with 0.1C at 45 °C, and is subjected to the processes of formation, standing and the like. In this way, the first pre-electrolytic solution fully infiltrates the electrode assembly. After that, the second pre-electrolytic solution is injected so that the second pre-electrolytic solution is distributed in the space between the battery casing and the electrode assembly. The lithium-ion battery is obtained through processes of sealing, capacity and the like. A test method is described below, and clearly shows that the lithium-ion battery contains 266.9 g of the first electrolytic solution and 75.3 g of the second electrolytic solution. Accordingly, a combined amount of the first electrolytic solution and the second electrolytic solution is 342.2 g.

### [Embodiments 2-20 and Comparative Examples 1-2]

Preparation methods of Embodiments 2-20 and Comparative Examples 1-2 are substantially the same as that of Embodiment 1, and differences therebetween are merely shown in Tables 1 and 2.

Lithium-ion batteries prepared from Embodiments 2-20 and Comparative Examples 1-2 are tested according to the test method below, and results are recorded in Tables 3-5.

### [Test of Related Parameters]

### (1) Test Method for d1, t1, d2 and t2:

A rated capacity of the lithium-ion battery is 1C, the lithium-ion battery is fully discharged to a lower limit of a rated voltage of the battery at a rate of 0.1C under 25 °C. The battery casing is formed with a small opening. The battery is inclined in such a manner that the opening is located at the lowest position of the battery. The electrolytic solution is then poured out from the opening and collected by a container, until there is no electrolytic solution to be dripped within 30s. The mass of the electrolytic solution in the container is weighed to obtain a weight, which is the mass of the second electrolytic solution and recorded as d2. With reference to GB/T 9722-2006, the type and the mass ratio t2 of the additive in the second electrolytic solution are detected by a gas chromatography method.

The above battery is weighed and recorded as m1. The battery is then disassembled and placed into a container, into which extractant with a volume that is 2 times or more of the volume of the lithium-ion battery is poured. The extractant is commonly other solvents different from the solvent of the electrolytic solution of the battery. For example, when the electrolytic solution contains EC and EMC, the extractant uses DMC that is not contained in the electrolytic solution. The battery is immersed in the extractant, which is replaced with new extractant after immersing for 24 hours. The battery is immersed in the new extractant for 24 hours again, and is then taken out and dried for 24 hours under 45°C at a relative pressure of -80 kPa. After that, the battery is weighed to obtain the weight of the battery. The battery is then dried for 5 hours under the same conditions and is weighed. If a difference between the two weights is ≤0.01g, the weight of the second weighing is recorded as m2. If the difference between the two weights is >0.01g, the battery is continued to be dried until the difference between the last two weighs is ≤0.01g, and the last weight is recorded as m2. The mass of the first electrolytic solution is d1 = m1-m2.

The extractant obtained after soaking the battery twice as above are mixed, and with reference to GB/T 9722-2006, the type and the mass ratio t1 of the additive in the first electrolytic solution are measured by the gas chromatography method.

### (2) Method for Testing Initial DCR of Battery

At ambient temperature, the battery is charged to 3.65 V at a constant current of 0.5C, and is then charged at a constant voltage until the current is 0.05C. The battery is then discharged for 30 minutes at a constant current of 0.5C to adjust the battery to 50%SOC, and the voltage of the battery is recorded as U1. After that, the battery is discharged for 30 seconds at a constant current of 4C, sampling points by adopting 0.1 second. A voltage at end of the discharging is recorded as U2. The discharging DCR when the battery is 50%SOC represents the initial DCR of the battery, and the initial DCR = (U1-U2)/4C. This result is recorded in the "DCR/mohm" column in Table 5.

### (3) Measurement of High Temperature Cycle Performance at 60°C

At 60°C, the batteries of various Embodiments and Comparative Examples are charged to 3.65 V at a constant current of 0.5C, and are then charged at a constant voltage until the current is 0.05C. The battery stands for 5 minutes, and is then discharged to 2.5 V at a constant current of 1/3C, which is a first charging-discharging cycle process of the battery. A discharging capacity obtained by the first charging-discharging cycle process is recorded as the discharging capacity of the first cycle of the battery. According to the above method, the battery is subjected to a plurality of cyclic charging-discharging processes, and a battery capacity retention rate (%) = (discharging capacity after cycles of the battery/discharging capacity of the first cycle of the battery) × 100%. The number of cycles when the battery capacity retention rate is 80% is recorded. The results are recorded in a column of "number of cycles when the cycle attenuates to 80%SOH at 60°C" in Table 5.

**Table 1**

| | First Pre-electrolytic Solution | | | | | | | | | |
|---|---|---|---|---|---|---|---|---|---|---|
| | Formula | | | | | | | | | Mass of First Pre-electrolytic Solution (g) |
| | EC | PC | DMC | EMC | DEC | VC | LiPO₂F₂ | TMSP | LiPF₆ | |
| Embodiment 1 | 30% | / | 50% | 10% | 10% | 2.5% | 0.7% | 0.3% | 1 | 280 |
| Embodiment 2 | / | 30% | 50% | 10% | 10% | 2.5% | 0.7% | 0.3% | 1 | 280 |
| Embodiment 3 | 20% | / | 50% | 20% | 10% | 2.5% | 0.7% | 0.3% | 1 | 280 |
| Embodiment 4 | 50% | / | 40% | 10% | / | 2.5% | 0.7% | 0.3% | 1 | 280 |
| Embodiment 5 | 30% | / | 50% | 10% | 10% | 2.3% | 0.3% | 0.2% | 1 | 280 |
| Embodiment 6 | 30% | / | 50% | 10% | 10% | 4.9% | 0.4% | 0.3% | 1 | 280 |
| Embodiment 7 | 30% | / | 50% | 10% | 10% | 3.0% | 0.7% | 0.3% | 1 | 216 |
| Embodiment 8 | 30% | / | 50% | 10% | 10% | 2.2% | 0.7% | 0.3% | 1 | 341 |
| Embodiment 9 | 30% | / | 50% | 10% | 10% | 2.5% | 0.7% | 0.3% | 1 | 280 |
| Embodiment 10 | 30% | / | 50% | 10% | 10% | 2.5% | 0.7% | 0.3% | 1 | 280 |
| Embodiment 11 | 30% | / | 50% | 10% | 10% | 2.2% | 0.7% | 0.3% | 1 | 341 |
| Embodiment 12 | 30% | / | 50% | 10% | 10% | 2.8% | 0.3% | 0.2% | 1 | 216 |
| Embodiment 13 | 10% | / | 50% | 10% | 10% | 2.5% | 0.7% | 0.3% | 1 | 280 |
| Embodiment 14 | 60% | / | 50% | 10% | 10% | 2.5% | 0.7% | 0.3% | 1 | 280 |
| Embodiment 15 | 30% | / | 50% | 10% | 10% | 2.2% | / | 0.3% | 1 | 280 |
| Embodiment 16 | 30% | / | 50% | 10% | 10% | 5.5% | 0.7% | 0.3% | 1 | 280 |
| Embodiment 17 | 30% | / | 50% | 10% | 10% | 3.5% | 0.7% | 0.3% | 1 | 180 |
| Embodiment 18 | 30% | / | 50% | 10% | 10% | 2.2% | 0.7% | 0.3% | 1 | 345 |
| Embodiment 19 | 30% | / | 50% | 10% | 10% | 2.5% | 0.7% | 0.3% | 1 | 280 |
| Embodiment 20 | 30% | / | 50% | 10% | 10% | 2.5% | 0.7% | 0.3% | 1 | 280 |
| Comparative Example 1 | 30% | / | 50% | 10% | 10% | 2.5% | 0.7% | 0.3% | 1 | 280 |
| Comparative Example 2 | 30% | / | 50% | 10% | 10% | 3.2% | / | / | 1 | 216 |

**Table 2**

| | Second Pre-electrolytic Solution | | | | | | | |
|---|---|---|---|---|---|---|---|---|
| | Formula | | | | | | | Mass of Second Pre-electrolytic Solution (g) |
| | EC | DMC | EMC | DEC | VC | SN | LiPF₆ | |
| Embodiment 1 | 30% | 50% | 20% | / | 6.0% | 1.0% | 1 | 79 |
| Embodiment 2 | 30% | 50% | 20% | / | 6.0% | 1.0% | 1 | 79 |
| Embodiment 3 | 20% | 50% | 20% | 10% | 6.0% | 1.0% | 1 | 79 |
| Embodiment 4 | 50% | 40% | 10% | / | 6.0% | 1.0% | 1 | 79 |
| Embodiment 5 | 30% | 50% | 20% | / | 6.0% | 1.0% | 1 | 79 |
| Embodiment 6 | 30% | 50% | 20% | / | 6.0% | 1.0% | 1 | 79 |
| Embodiment 7 | 30% | 50% | 20% | / | 6.0% | 1.0% | 1 | 144 |
| Embodiment 8 | 30% | 50% | 20% | / | 6.0% | 1.0% | 1 | 18 |
| Embodiment 9 | 30% | 50% | 20% | / | 3.0% | 1.0% | 1 | 79 |
| Embodiment 10 | 30% | 50% | 20% | / | 15.0% | 1.0% | 1 | 79 |
| Embodiment 11 | 30% | 50% | 20% | / | 3.0% | 1.0% | 1 | 18 |
| Embodiment 12 | 30% | 50% | 20% | / | 15.0% | 1.0% | 1 | 144 |
| Embodiment 13 | 30% | 50% | 20% | / | 6.0% | 1.0% | 1 | 79 |
| Embodiment 14 | 30% | 50% | 20% | / | 6.0% | 1.0% | 1 | 79 |
| Embodiment 15 | 30% | 50% | 20% | / | 6.0% | 1.0% | 1 | 79 |
| Embodiment 16 | 30% | 50% | 20% | / | 6.0% | 1.0% | 1 | 79 |
| Embodiment 17 | 30% | 50% | 20% | / | 6.0% | 1.0% | 1 | 180 |
| Embodiment 18 | 30% | 50% | 20% | / | 6.0% | 1.0% | 1 | 14 |
| Embodiment 19 | 30% | 50% | 20% | / | 1.0% | 1.0% | 1 | 79 |
| Embodiment 20 | 30% | 50% | 20% | / | 17.0% | 1.0% | 1 | 79 |
| Comparative Example 1 | 30% | 50% | 20% | / | / | / | 1 | 79 |
| Comparative Example 2 | 30% | 50% | 20% | / | 15.0% | 1.0% | 1 | 144 |

**Table 3**

| | First Electrolytic Solution | | | | | | | | | |
|---|---|---|---|---|---|---|---|---|---|---|
| | Formula | | | | | | | | | Mas of First Electrolytic Solution d1(g) |
| | EC | PC | DMC | EMC | DEC | VC | LiPO₂F₂ | TMSP | LiPF₆ (mol/L) | |
| Embodiment 1 | 30% | / | 50% | 10% | 10% | 1.0% | 0.5% | 0.2% | 1 | 266.9 |
| Embodiment 2 | / | 30% | 50% | 10% | 10% | 1.0% | 0.5% | 0.2% | 1 | 266.9 |
| Embodiment 3 | 20% | / | 50% | 20% | 10% | 1.0% | 0.5% | 0.2% | 1 | 266.9 |
| Embodiment 4 | 50% | / | 40% | 10% | / | 1.0% | 0.5% | 0.2% | 1 | 266.9 |
| Embodiment 5 | 30% | / | 50% | 10% | 10% | 0.8% | 0.1% | 0.1% | 1 | 266.9 |
| Embodiment 6 | 30% | / | 50% | 10% | 10% | 3.5% | 0.2% | 0.2% | 1 | 266.9 |
| Embodiment 7 | 30% | / | 50% | 10% | 10% | 1.0% | 0.5% | 0.2% | 1 | 205.3 |
| Embodiment 8 | 30% | / | 50% | 10% | 10% | 1.0% | 0.5% | 0.2% | 1 | 325.1 |
| Embodiment 9 | 30% | / | 50% | 10% | 10% | 1.0% | 0.5% | 0.2% | 1 | 266.9 |
| Embodiment 10 | 30% | / | 50% | 10% | 10% | 1.0% | 0.5% | 0.2% | 1 | 266.9 |
| Embodiment 11 | 30% | / | 50% | 10% | 10% | 1.0% | 0.5% | 0.2% | 1 | 325.1 |
| Embodiment 12 | 30% | / | 50% | 10% | 10% | 0.8% | 0.1% | 0.1% | 1 | 205.3 |
| Embodiment 13 | 10% | / | 50% | 10% | 10% | 1.0% | 0.5% | 0.2% | 1 | 266.9 |
| Embodiment 14 | 60% | / | 50% | 10% | 10% | 1.0% | 0.5% | 0.2% | 1 | 266.9 |
| Embodiment 15 | 30% | / | 50% | 10% | 10% | 0.5% | / | 0.2% | 1 | 266.9 |
| Embodiment 16 | 30% | / | 50% | 10% | 10% | 4.0% | 0.5% | 0.2% | 1 | 266.9 |
| Embodiment 17 | 30% | / | 50% | 10% | 10% | 1.0% | 0.5% | 0.2% | 1 | 171.1 |
| Embodiment 18 | 30% | / | 50% | 10% | 10% | 1.0% | 0.5% | 0.2% | 1 | 328.5 |
| Embodiment 19 | 30% | / | 50% | 10% | 10% | 1.0% | 0.5% | 0.2% | 1 | 266.9 |
| Embodiment 20 | 30% | / | 50% | 10% | 10% | 1.0% | 0.5% | 0.2% | 1 | 266.9 |
| Comparative Example 1 | 30% | / | 50% | 10% | 10% | 1.0% | 0.5% | 0.2% | 1 | 266.9 |
| Comparative Example 2 | 30% | / | 50% | 10% | 10% | 0.9% | / | / | 1 | 205.3 |

**Table 4**

| | Second Electrolytic Solution | | | | | | | |
|---|---|---|---|---|---|---|---|---|
| | Formula | | | | | | | Mass of Second Electrolytic Solution d2(g) |
| | EC | DMC | EMC | DEC | VC | SN (Succinonitrile) | LiPF₆ (mol/L) | |
| Embodiment 1 | 30% | 50% | 20% | / | 6.0% | 1.0% | 1 | 75.3 |
| Embodiment 2 | 30% | 50% | 20% | / | 6.0% | 1.0% | 1 | 75.3 |
| Embodiment 3 | 20% | 50% | 20% | 10% | 6.0% | 1.0% | 1 | 75.3 |
| Embodiment 4 | 50% | 40% | 10% | / | 6.0% | 1.0% | 1 | 75.3 |
| Embodiment 5 | 30% | 50% | 20% | / | 6.0% | 1.0% | 1 | 75.3 |
| Embodiment 6 | 30% | 50% | 20% | / | 6.0% | 1.0% | 1 | 75.3 |
| Embodiment 7 | 30% | 50% | 20% | / | 6.0% | 1.0% | 1 | 136.9 |
| Embodiment 8 | 30% | 50% | 20% | / | 6.0% | 1.0% | 1 | 17.1 |
| Embodiment 9 | 30% | 50% | 20% | / | 3.0% | 1.0% | 1 | 75.3 |
| Embodiment 10 | 30% | 50% | 20% | / | 15.0% | 1.0% | 1 | 75.3 |
| Embodiment 11 | 30% | 50% | 20% | / | 3.0% | 1.0% | 1 | 17.1 |
| Embodiment 12 | 30% | 50% | 20% | / | 15.0% | 1.0% | 1 | 136.9 |
| Embodiment 13 | 30% | 50% | 20% | / | 6.0% | 1.0% | 1 | 75.3 |
| Embodiment 14 | 30% | 50% | 20% | / | 6.0% | 1.0% | 1 | 75.3 |
| Embodiment 15 | 30% | 50% | 20% | / | 6.0% | 1.0% | 1 | 75.3 |
| Embodiment 16 | 30% | 50% | 20% | / | 6.0% | 1.0% | 1 | 75.3 |
| Embodiment 17 | 30% | 50% | 20% | / | 6.0% | 1.0% | 1 | 171.1 |
| Embodiment 18 | 30% | 50% | 20% | / | 6.0% | 1.0% | 1 | 13.7 |
| Embodiment 19 | 30% | 50% | 20% | / | 1.0% | 1.0% | 1 | 75.3 |
| Embodiment 20 | 30% | 50% | 20% | / | 17.0% | 1.0% | 1 | 75.3 |
| Comparative Example 1 | 30% | 50% | 20% | / | / | / | 1 | 75.3 |
| Comparative Example 2 | 30% | 50% | 20% | / | 15.0% | 1.0% | 1 | 136.9 |

**Table 5**

| | Mass of First Electrolytic Solution d1(g) | Ratio of Additive in First Electrolytic Solution t1 | Mass of Second Electrolytic Solution d2(g) | Ratio of Additive in Second Electrolytic Solution t2 | [(d2×t2)/ (d1×t1)] | DCR /mohm | Number of Cycles When Cycle Attenuates to 80%SOH at 60°C |
|---|---|---|---|---|---|---|---|
| Embodiment 1 | 266.9 | 1.7% | 75.3 | 7% | 1.16 | 4 | 1000 |
| Embodiment 2 | 266.9 | 1.7% | 75.3 | 7% | 1.16 | 4 | 913 |
| Embodiment 3 | 266.9 | 1.7% | 75.3 | 7% | 1.16 | 4.3 | 1034 |
| Embodiment 4 | 266.9 | 1.7% | 75.3 | 7% | 1.16 | 3.5 | 985 |
| Embodiment 5 | 266.9 | 1.0% | 75.3 | 7% | 1.97 | 3.8 | 943 |
| Embodiment 6 | 266.9 | 3.9% | 75.3 | 7% | 0.51 | 4.6 | 1055 |
| Embodiment 7 | 205.3 | 1.7% | 136.9 | 7% | 2.75 | 3.6 | 1075 |
| Embodiment 8 | 325.1 | 1.7% | 17.1 | 7% | 0.22 | 4.2 | 931 |
| Embodiment 9 | 266.9 | 1.7% | 75.3 | 4% | 0.66 | 4 | 940 |
| Embodiment 10 | 266.9 | 1.7% | 75.3 | 16% | 2.65 | 4 | 1070 |
| Embodiment 11 | 325.1 | 1.7% | 17.1 | 4% | 0.12 | 4.3 | 906 |
| Embodiment 12 | 205.3 | 1.0% | 136.9 | 16% | 10.67 | 3.6 | 1097 |
| Embodiment 13 | 266.9 | 1.7% | 75.3 | 7% | 1.16 | 6.5 | 973 |
| Embodiment 14 | 266.9 | 1.7% | 75.3 | 7% | 1.16 | 3.3 | 833 |
| Embodiment 15 | 266.9 | 0.7% | 75.3 | 7% | 2.82 | 3.5 | 810 |
| Embodiment 16 | 266.9 | 4.7% | 75.3 | 7% | 0.42 | 6.2 | 1033 |
| Embodiment 17 | 171.1 | 1.7% | 171.1 | 7% | 4.12 | 3.5 | 823 |
| Embodiment 18 | 328.5 | 1.7% | 13.7 | 7% | 0.17 | 6.1 | 704 |
| Embodiment 19 | 266.9 | 1.7% | 75.3 | 2% | 0.33 | 3.9 | 695 |
| Embodiment 20 | 266.9 | 1.7% | 75.3 | 18% | 2.99 | 4.2 | 1136 |
| Comparative Example 1 | 266.9 | 1.7% | 75.3 | 0 | 0 | 3.8 | 577 |
| Comparative Example 2 | 205.3 | 0.9% | 136.9 | 16% | 11.85 | 5.3 | 769 |

Embodiments 1-20 of Table 5 shows that when the relation of 0.1≤[(d2×t2)/(d1×t1)]≤11 is satisfied, the number of cycles when the cycle attenuates to 80%SOH at 60°C is relatively high and a value of DCR/mohm is relatively low, which indicates that the lithium-ion battery has relatively low initial direct current resistance and good battery life.

As can be seen from Comparative Example 1 of Table 5, when the second electrolytic solution does not contain additive, the value of DCR/mohm is low, but the number of cycles when the cycle attenuates to 80%SOH at 60°C is seriously reduced. Accordingly, the battery life of the lithium-ion battery is short.

As can be seen from Comparative Example 2 of Table 5, when [(d2×t2)/(d1×t1)] exceeds 11, the value of DCR/mohm is low, but the number of cycles when the cycle attenuates to 80%SOH at 60°C is seriously reduced, which indicates that the battery life of the lithium-ion battery is short.

## Claims

1. A lithium-ion battery, comprising:
a first electrolytic solution and a second electrolytic solution,
wherein the first electrolytic solution and the second electrolytic solution satisfies 0.1≤[(d2×t2)/(d1×t1)]≤11, where
d1 is a mass of the first electrolytic solution,
d2 is a mass of the second electrolytic solution,
t1 is a ratio of a mass of an additive of the first electrolytic solution to the mass of the first electrolytic solution, and
t2 is a ratio of a mass of an additive of the second electrolytic solution to the mass of the second electrolytic solution.

2. The lithium-ion battery according to claim 1, wherein 1wt%≤t1≤4wt%, and/or 3wt%≤t2 ≤15wt%.

3. The lithium-ion battery according to claim 1 or 2, wherein 60% ≤ d1/(d1+d2) ≤ 95%.

4. The lithium-ion battery according to any one of claims 1-3, wherein the additive of the first electrolytic solution is one or more selected from vinylene carbonate, fluoroethylene carbonate, tris(trimethylsilyl phosphate), lithium difluorobisoxalato phosphate, lithium bis(oxalato) borate, and lithium difluorophosphate.

5. The lithium-ion battery according to any one of claims 1-4, wherein the first electrolytic solution contains a cyclic ester solvent, and the cyclic ester solvent is a compound as shown in Formula I, 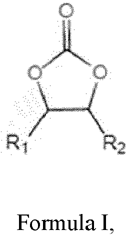 where R₁ and R₂ each are one selected independently from H atom, methyl, ethyl, fluoromethyl, and fluoroethyl.

6. The lithium-ion battery according to claim 5, wherein the cyclic ester solvent is one or more selected from ethylene carbonate, propylene carbonate, difluoroethylene carbonate, trifluoropropylene carbonate, 4-(2,2,3,3,4,4,5,5,5-nonafluoropentyl)-1,3-dioxolane-2-ketone, and 4-((2,2,3,3-tetrafluoropropoxy) methyl)-1,3-dioxolane-2-ketone.

7. The lithium-ion battery according to claim 5 or claim 6, wherein a ratio of a mass of the cyclic ester solvent to a total mass of solvent in the first electrolytic solution is 20 wt% to 50 wt%.

8. The lithium-ion battery according to any one of claims 1-7, wherein the second electrolytic solution contains a film-forming additive, and the film-forming additive is one or more selected from vinylene carbonate, fluoroethylene carbonate, ethylene carbonate, and 1,3-propane sultone.

9. The lithium-ion battery according to claim 8, wherein a ratio of a mass of the film-forming additive to a total mass of additive in the second electrolytic solution is 70 wt% or more.

10. A battery module, comprising the lithium-ion battery according to any one of claims 1-9.

11. A battery pack, comprising the battery module according to claim 10.

12. A powered device, comprising at least one of the lithium-ion battery according to any one of claims 1-9, the battery module according to claim 10, or the battery pack according to claim 11.
